# EUROPÄISCHE PATENTSCHRIFT

(11) **EP 2 220 485 B1**
(45) Veröffentlichungstag und Bekanntmachung des Hinweises auf die Patenterteilung: **01.08.2018**
(21) Anmeldenummer: 08854001.8
(22) Anmeldetag: 20.11.2008
(51) Int. Cl.: G01N 33/00, G01N 21/64, G01N 21/35, G01N 27/62

(54) **LASER-MULTISENSORSYSTEM ZUR SELEKTIVEN SPURENANALYSE ORGANISCHER STOFFE**
LASER MULTI-SENSOR SYSTEM FOR THE SELECTIVE TRACE ANALYSIS OF ORGANIC MATERIAL
SYSTÈME MULTI-CAPTEURS LASER POUR L'ANALYSE SÉLECTIVE DE TRACES DE SUBSTANCES ORGANIQUES

(30) Priorität: 27.11.2007 DE 102007057374
(43) Veröffentlichungstag der Anmeldung: 25.08.2010
(73) Patentinhaber: Spherea GmbH, 89077 Ulm (DE)
(72) Erfinder: GÖBEL, Johann, 81547 München (DE); PEUSER, Peter, 85521 Riemerling (DE)
(74) Vertreter: Mazabraud, Xavier
(86) Internationale Anmeldenummer: PCT/EP2008/009814
(87) Internationale Veröffentlichungsnummer: WO 2009/068218

(56) Entgegenhaltungen:
- WO-A-2007/123555
- WO-A-2009/016169
- DE-A1- 10 247 272
- JP-A- 60 066 155
- US-A1- 2004 057 050
- HERMANN J ET AL: "Analysis of gas-phase reactions during pulsed laser ablation using laser-induced fluorescence, absorption, and emission spectroscopy" PROCEEDINGS OF THE SPIE - THE INTERNATIONAL SOCIETY FOR OPTICAL ENGINEERING SPIE-INT. SOC. OPT. ENG USA, Bd. 4762, 2002, Seiten 27-40, XP002517925 ISSN: 0277-786X
- AMES F ET AL: "A HIGH-TEMPERATURE LASER ION SOURCE FOR TRACE ANALYSIS AND OTHER APPLICATIONS" APPLIED PHYSICS B. PHOTOPHYSICS AND CHEMISTRY, SPRINGER VERLAG. HEIDELBERG, DE, Bd. B51, Nr. 3, 1. September 1990 (1990-09-01), Seiten 200-206, XP000149684
- SANI E ET AL: "General purpose plasma catalysis pilot plant for gaseous pollutants removal: power supply and reactor design" PROCEEDINGS OF THE ELEVENTH INTERNATIONAL CONFERENCE ON GAS DISCHARGES AND THEIR APPLICATIONS INST. ELECTR. ENG. JAPAN TOKYO, JAPAN, Bd. 2, 1995, Seiten 430-433 vol.2, XP008103191 ISBN: 4-88686-499-6

## Beschreibung

Die vorliegende Erfindung betrifft ein Laser-Multisensorsystem zur selektiven Spurenanalyse organischer Stoffe, wobei das Laser-Multisensorsystem zumindest ein Laser-Ionen-Mobilitätsspektrometer, einen Detektor zur Absorptionsmessung und eine Fluoreszenz-Messeinrichtung aufweist.

Aus dem Stand der Technik sind Vorrichtungen zum Erfassen einzelner organischer Stoffe bekannt. Diese bekannten Vorrichtungen weisen in der Regel eine geschlossene Probenkammer zur Analyse der Stoffe auf. Die Analyse selbst dauert in derartigen Vorrichtungen vom Stand der Technik einige Minuten.

Vorrichtungen zur Detektion von Bakterien, Viren oder anderen Mikropartikeln sehen beispielsweise das Ausfiltern und Markieren der entsprechenden Partikel vor, bevor diese dann automatisch erfasst werden können.

So beschreibt die DE 103 06 900 A1 ein Spektrometer mit Laseranordnung zur Gasanalyse. Dabei umfasst das Spektrometer eine Kammer zur Aufnahme eines Gases, eine Einrichtung zur Erzeugung eines Potentialgefälles in der Kammer, eine Laserlichtquelle sowie einen optischen Resonator, der durch gegenüberliegende Spiegel gebildet ist oder als Ringresonator ausgebildet ist. Innerhalb der Kammer wird ein Laserstrahl zur Ionisierung des Gases erzeugt. Ein Ionenkollektor dient dabei zur Detektion der beschleunigten Ionen.

Eine ähnliche Vorrichtung wird in der DE 102 47 272 A1 beschrieben, in der jedoch anstelle eines durch gegenüberliegende Spiegel aufgebauten optischen Resonators eine Multireflexionszelle vorgesehen ist, die Spiegel aufweist, die derart ausgebildet sind, dass der Laserstrahl vielfach zwischen den Spiegeln reflektiert wird. Dadurch wird die Wegstrecke des mit dem Gas wechselwirkenden Laserstrahls erhöht, was zu einem größeren Strom am lonenkollektor führt. Durch die mittels der Spiegel erzeugte optische Anordnung werden eine Vielzahl von jeweils zwischen zwei Reflexionspunkten verlaufenden Laserstrahlen gebildet, die sich in einem zentralen Bereich schneiden und sich zu den Spiegeln hin auffächern. Dieses Dokument offenbart ein System wie im Oberbegriff des Anspruchs 1. Die WO 2007/12355 A2 betrifft ein System und ein Verfahren zur Detektion von Sprengstoff in einer Probe. Das System hat eine Laserquelle, eine Videoaufnahmevorrichtung, ein optisches System zur selektiven Erfassung der erzeugten Photonen und zur selektiven Zuweisung der verschiedenen Photonen an die entsprechenden Detektoren. Die Photonen der Laserquelle werden dabei auf die zu messende Probe gerichtet und wechselwirken mit der Probe, so dass durch Lumineszenzemission, Streuung und Plasmaemission Photonen an der Probe erzeugt oder gestreut werden, wobei die getrennte Messung und Auswertung der einzelnen Photonensignale Aufschluss über die Zusammensetzung der Probe ergeben.
Aus der zum Stand der Technik nach Art. 54(3) EPÜ zählenden WO2009/016169 A2 ist ein Verfahren und eine Vorrichtung für eine Echtzeitanalyse von chemischen biologischen und explosiven Substanzen in der Luft bekannt, wobei wenigstens ein Gassensor, ein Fluoreszenz/Lumineszenz-Sensor und ein Sensor zur Bestimmung der Anzahl und Größe von Partikeln an eine Multireflexionszelle zum mehrfachen Reflektieren eines Laserstrahls angeschlossen sind. Es ist eine einzelne Laserquelle offenbart, die abstimmbar sein kann. Messungen mit den unterschiedlichen Sensoren werden nacheinander durchgeführt.
Nachteil des bekannten Standes der Technik ist es, dass in der Regel nur eine von vielen Gefahrstoffklassen mit den jeweiligen Vorrichtungen abgedeckt wird. Eine Untersuchung einer Probe auf mehrere organische Stoffe muss daher in der Regel sequenziell erfolgen, was insbesondere bei kleinen Proben problematisch ist. Auch können die nacheinander durchgeführten Analysen zu Veränderungen der Probe führen, welche das Messergebnis verfälschen. In der Regel kann hier nicht sichergestellt werden, dass die relevanten Informationen von ein und demselben Molekül-Ensemble stammen.

Ferner sind die bekannten Vorrichtungen nicht in der Lage, ohne Voranreicherung die Stoffe direkt aus der Umgebungsluft zu detektieren. Die üblichen Samplingzeiten im Minutenbereich können für bestimmte Anwendungen, wie beispielsweise Durchgangskontrollen, Portalüberwachung, Gefahrüberwachung, etc. nicht zur Anwendung kommen. Außerdem sind die bekannten Lösungen häufig schwer und sperrig und sind mit hohen Anschaffungskosten verbunden.
Der Erfindung liegt daher die Aufgabe zugrunde, die Nachteile der bekannten Lösungen des Standes der Technik zu vermeiden und eine verbesserte Lösung zur hochempfindlichen und hochselektiven Spurenanalyse von organischen Stoffen, insbesondere Gefahrstoffen wie Explosiv- und Kampfstoffen in der Luft zur Verfügung zu stellen. Insbesondere sollen diese Stoffe schnell und genau in der Umgebungslufterkannt und nachgewiesen werden.
Diese Aufgabe wird erfindungsgemäß durch ein Laser-Multisensorsystem zur selektiven Spurenanalyse organischer Stoffe mit den Merkmalen des Patentanspruchs 1 gelöst. Vorteilhafte Ausgestaltungen und Weiterbildungen der Erfindung sind in den abhängigen Ansprüchen angegeben.
Das erfindungsgemäße Laser-Multisensorsystem zur selektiven Spurenanalyseorganischer Stoffe ist dadurch gekennzeichnet, dass eine Vorrichtung zum simultanen Erzeugen einer gemeinsamen Laserstrahlung mit unterschiedlichen Wellenlängen und Pulsen zum gleichzeitigen Betrieb des Laserlonen-Mobilitätsspektrometers, des Detektors zur Absorptionsmessung und der Fluoreszenz-Messeinrichtung vorgesehen ist. Die Vorrichtung zum simultanen Erzeugen einer gemeinsamen Laserstrahlung ist als Lasersystem ausgebildet, welches zumindest drei Laserquellen mit unterschiedlicher Wellenlänge aufweist, die mittels einer Strahlkopplung in einen gemeinsamen Strahl gekoppelt sind. Die Laserstrahlen der Laserquellen unterschiedliche Wellenlängen sind auf die unterschiedlichen Detektoren abgestimmt, wobei die Laserquellen mittels einer Pulssteuereinheit synchronisiert sind, um einen synchronisierten Laserpuls mit Pulskomponenten unterschiedlicher Wellenlängen und Dauer zum gleichzeitigen Betrieb des Laser-Ionen-Mobilitätsspektrometers, des Detektors zur Absorptionsmessung und der Fluoreszenz-Messeinrichtung zu erzeugen.

Hierdurch wird ein kompaktes integriertes Laser-basiertes Multisensorsystem für die Untersuchung ein und derselben Probe durch simultane Messungen mit einem Detektionssystem geschaffen, das aus einer Anordnung besteht, die ein Laserlonen-Mobilitätsspektrometer (LIMS), einem Detektor zur Absorptionsmessung und ein Fluoreszenz-Messsystem in einer speziellen, kompakten Konfiguration integriert. Durch die gleichzeitige Untersuchung einer Probe mittels unterschiedlicher physikalischer Laser-Messverfahren, die unterschiedliche physikalische Informationen über die Probe vermitteln, wird eine beträchtliche Steigerung der Selektivität und der Empfindlichkeit in Bezug auf den Nachweis von Explosiv- und Gefahrstoffen erreicht.

Hierdurch werden die Nachteile der bekannten Lösungen des Standes der Technikvermieden, und es wird eine verbesserte Lösung zur hochempfindlichen und hochselektiven Spurenanalyse von organischen Stoffen, insbesondere Gefahrstoffen wie Explosiv- und Kampfstoffen in der Luft zur Verfügung gestellt. Insbesondere werden diese Stoffe schnell und genau in der Umgebungsluft erkannt und nachgewiesen. Weitere Vorteile gegenüber anderen Methoden sind eine deutliche Verbesserung der Aussagekraft von Detektionsverfahren für Explosivstoffe und Gefahrstoffen, eine deutliche Verbesserung von Sensitivität und Selektivität und eine hohe Mobilität des erfindungsgemäßen Laser-Multisensorsystem durch ein kompaktes Sensorsystem.

Eine vorteilhafte Weiterbildung der Erfindung sieht vor, dass die Vorrichtung zum Erzeugen eines gemeinsamen Laserstrahls mit Wellenlängen im IR-, sichtbaren und UV-Bereich vorgesehen ist.

Eine vorteilhafte Weiterbildung der Erfindung sieht vor, dass für die Absorptionsmessung eine ebene Multireflexionskonfiguration vorgesehen ist. Aufgrund deslangen Strahlengangs wird eine große Anzahl von Reflexionssignalen senkrecht zum Laserstrahl erzeugt.

Eine vorteilhafte Weiterbildung der Erfindung sieht vor, dass das Laser-Ionen-Mobilitätsspektrometer für den mehrfachen Durchgang der Laserstrahlung durch die Probe vorgesehen ist. Eines der Messprinzipien der vorliegenden Erfindung basiert auf einer spektroskopischen Gas-Sensor-Technologie, die mit der Geschwindigkeit von Ionen während deren Bewegung unter dem Einfluss eines elektrischen Driftfelds in der Luft arbeitet. Aufgrund der unterschiedlichen Masse und aufgrund des unterschiedlichen Querschnitts der Ionen, ist eine Unterscheidung einzelner Stoffe leicht möglich.

Das Signal wird als ein Ankunftszeitspektrum verschiedener Ionen-Arten gemessen, so wie bei der Flugzeit-Spektroskopie, jedoch ohne das Erfordernis von sperriger Instrumentierung, von Vakuumpumpen, etc.

Für die vorliegende Erfindung wird die so genannte lonen-Mobilitäts-Spektroskopie (IMS) vorgeschlagen. Die meisten dabei verwendeten Instrumente arbeiten mit einem Membran-Einlass-System und radioaktiven Ionenquellen. Dies schützt die Instrumente gegen Wasser, Dampf und alle möglichen anderen Verunreinigungen in der Luft. Dieses Ionisationsprinzip basiert auf einem Ladungstransfer-Reaktionsmechanismus, der auch als chemische Ionisation bezeichnet wird.

Ein wichtiges Element der Erfindung ist die Kombination einer sehr empfindlichen lonen-Erfassungsvorrichtung mit einem hoch selektiven, Laser-basierten Ionisationsmechanismus.

Der Ionisationsprozess selbst ist ein Multi-Photonen-Ionisationsschritt, der zu einem detaillierteren Ionenspektrum führt, das eine bessere Selektivität der Ionenbildungsstufe und eine bessere Empfindlichkeit herab bis in den ppt (parts per trillion) Bereich ermöglicht.

Der Analyseteil der lonen-Mobilitäts-Spektroskopie Instrumentierung wird benutzt, um beispielsweise enzymatische Reaktionsprodukte, Pyrolyse Edukte von Bio-Molekülen oder Chemikalien von Toxinen zu detektieren.

Eine vorteilhafte Weiterbildung der Erfindung sieht vor, dass die Fluoreszenz-Messeinrichtung einen großen Raumwinkel für die Detektion von charakteristischen Fluoreszenzstrahlungen aufweist. Auch die Fluoreszenzeinrichtung ist beispielsweise zum Erfassen von Bio-Molekülen geeignet.
Eine besonders vorteilhafte Weiterbildung der Erfindung sieht vor, dass das Laser-Multisensorsystem zur simultanen Messung einer Probe mit dem Laser-Ionen-Mobilitätsspektrometer, dem Detektor zur Absorptionsmessung und der Fluoreszenz-Messeinrichtung vorgesehen ist. Es ist ein wichtiges Merkmal der Erfindung, dass die Messungen gleichzeitig stattfinden und die Laseranregung in einer einzigen Laserstrahlung erfolgt, da nur somit gewährleistet ist, dass die relevanten Informationen von ein und demselben Molekül-Ensemble stammen. Erst dadurch wird es ermöglicht, dass über eine einzige Probe mehrere Informationen gewonnen werden und die Aussagekraft gesteigert werden kann.
Eine vorteilhafte Weiterbildung der Erfindung sieht vor, dass die simultane Messung in Echtzeit erfolgt. Hierdurch ist das erfindungsgemäße Laser-Multisensorsystem hervorragend für den Einsatz in Sicherheitsportalen, beispielsweise für die Personenkontrolle an Flughäfen, geeignet. Die Erfindung sieht vor, dass die Vorrichtung zum simultanen Erzeugen eines gemeinsamen Laserstrahls als Lasersystem vorgesehen ist, welches zumindest drei Laserquellen mit unterschiedlicher Wellenlänge aufweist, die mittels einer Strahlkopplung in einer gemeinsamen Strahlung gekoppelt sind. Beispielsweise kann eine kompakte Lasereinheit eingesetzt werden, welche geeignete Strahlung bei den für die jeweiligen Detektionsverfahren optimalen Wellenlängen und Pulsen im IR-, sichtbaren und UV-Bereich simultan erzeugt.
Die Erfindung sieht vor, dass das Lasersystem eine Pulssteuereinheit zur Synchronisation der zumindest drei Laserquellen unterschiedlicher Wellenlänge aufweist. Hierdurch werden die Laserstrahlen mit unterschiedlichen Wellenlängen gleich getaktet. Alle drei Laser werden mittels der gemeinsamen Pulssteuereinheit so synchronisiert, dass die Strahlung in einem einzigen Puls emittiert wird.
Bevorzugt enthält eine lange Komponente die Strahlung für die Absorptions- und die Fluoreszenzmessung, und eine kurze Komponente bewirkt die Ionisierung der Probenmoleküle. Die kurze Pulskomponente liegt vorzugsweisezeitlich am Ende der langen Komponente, da die Ionen dann durch das elektrische Feld im Ionen-Mobilitätsspektrometer abgesaugt werden und zur Detektionselektrode wandern.

Schließlich sieht eine vorteilhafte Weiterbildung der Erfindung vor, dass eine Auswertungseinheit zum Interpretieren der Detektorsignale vorgesehen ist. Die Interpretation der Detektor-Signale erfolgt beispielsweise mit Hilfe von optimierten Verfahren der Mustererkennung.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig. 1a: eine schematische Darstellung einer Messanordnung gemäß der vorliegenden Erfindung;
- Fig. 1b: Ansicht der Messanordnung aus Figur 1a um 90° gedreht;
- Figur 2:: eine schematische Darstellung der Strahlkopplung eines erfindungsgemäßen Lasersystems in einer Seitenansicht;
- Figur 3: eine schematische Darstellung der synchronisierten Laserpulse.

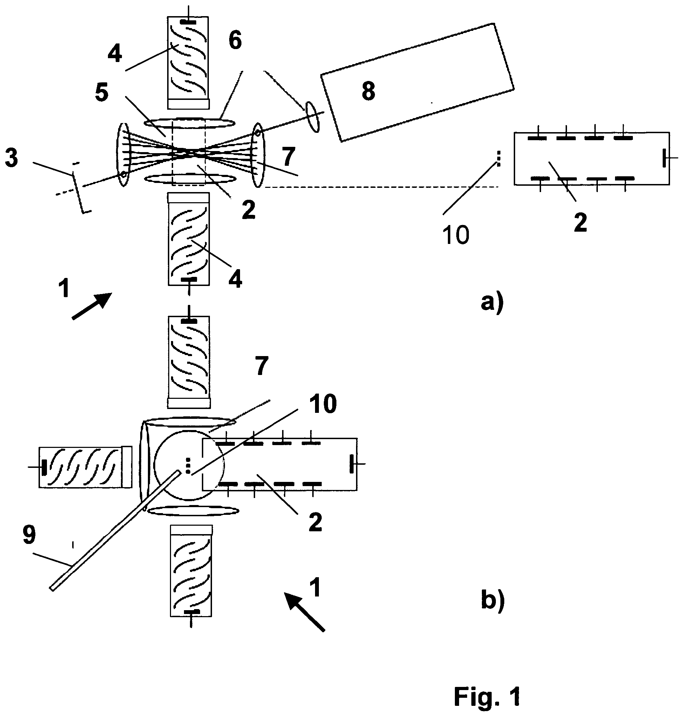

Figur 1a zeigt eine schematische Prinzip-Skizze der Messanordnung. Figur 1b zeigt die Messanordnung aus Figur 1a um 90° gedreht. Die in den Figuren 1a und 1b dargestellte bevorzugte Ausführungsform eines erfindungsgemäßen Laser-Multisensorsystems 1 ermöglicht eine lange Messstrecke für die Absorptionsmessung mittels eines Detektors zur Absorptionsmessung 3, beispielsweise mit IR-Strahlung, durch eine ebene Multireflexionszelle 5. Die Multireflexionszelle 5 weist dabei gegenüberliegend angeordnete Spiegel 7 sowie optische Linsen 6 auf.

Ferner wird eine große Ionisationsausbeute für ein angekoppeltes Laser-Ionen-Mobilitätsspektrometer 2 ermöglicht, welche durch den mehrfachen Durchgang der Laserstrahlung, vorzugsweise UV-Strahlung, durch die Probe 10 erreicht wird. Das Laser-Ionen-Mobilitätsspektrometer 2 (LIMS) ist in Figur 1a senkrecht zur Zeichnungsebene angeordnet, weshalb es aus Veranschaulichungsgründen an den rechten Zeichnungsrand herausgeschwenkt worden ist.

Außerdem ermöglicht das erfindungsgemäße Laser-Multisensorsystem 1 einen großen Raumwinkel für die Detektion von charakteristischer Fluoreszenzstrahlung mittels eines Fluoreszenzdetektors 4. Dabei wird die Fluoreszenzstrahlung mittelseiner weiteren im Messstrahl enthaltenen Wellenlänge angeregt. Schließlich ermöglicht das erfindungsgemäße System 1 die simultane Analyse einer Probe 10 mit allen drei o.g. Verfahren, d.h. Laser-Ionen-Mobilitätsspektroskopie, Absorptionsspektroskopie und Fluoreszenzanalyse.

Eine Probe 10 kann beispielsweise in einem Gasstrom enthalten sein, der mittels einer Probenzuleitung 9, beispielsweise gebildet durch ein Rohr mit vorzugsweise kleinem Durchmesser, in das Zentrum der Messanordnung geführt wird. Weiterhin ist es möglich, eine Probe 10, die sich auf einem geeigneten kleinen Träger befindet, in das Messzentrum einzuführen, wo sie beispielsweise durch Erhitzen vom Träger abgedampft wird.

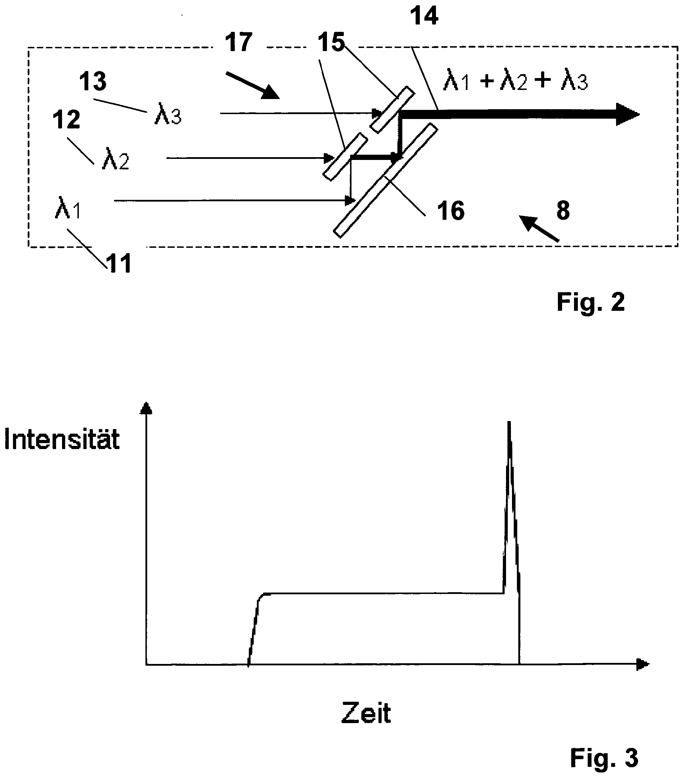

Figur 2 zeigt eine schematische Darstellung einer Strahlkopplung 17, bzw. des optischen Interface, eines Lasersystems 8, wie es in einem erfindungsgemäßen Laser-Multisensorsystem 1 zur Anwendung kommt. Das Lasersystem 8 weist eine erste Laserquelle 11, eine zweite Laserquelle 12 und eine dritte Laserquelle 13 auf, die im vorliegenden Ausführungsbeispiel als Festkörperlaser ausgestaltet sind und deren Laserstrahlen kollinear verlaufen. Die Laserstrahlen mit den Wellenlängen λ₁, λ₂ und λ₃, sind auf die unterschiedlichen Detektionsmethoden optimal abgestimmt und werden mittels der Strahlkopplung 17 in einer gemeinsamen Laserstrahlung 14 bereitgestellt. Die Strahlkopplung 17 besteht im vorliegenden Ausführungsbeispiel aus zwei Kantenfiltern 15 und einem Spiegel 16, durch die die Laserstrahlen der Laserquellen 11, 12, 13 umgelenkt und überlagert werden.

Figur 3 zeigt eine schematische Darstellung eines synchronisierten Laserpulses. Alle drei Laser werden mittels einer gemeinsamen Pulssteuereinheit (nicht gezeigt) so synchronisiert, dass die Strahlung in einem einzigen Puls emittiert wird.
Dabei beinhaltet der Puls eine lange Pulskomponente im Bereich von etwa 1 µs bis zu einigen ms sowie eine kurze Pulskomponente im Bereich von einigen ns, wie mit Figur 3 erläutert wird. Die lange Pulskomponente enthält die Strahlung für die Absorptions- und die Fluoreszenzmessung, und die kurze Komponente bewirkt die Ionisierung der Probenmoleküle. Die kurze Pulskomponente liegt zeitlich am Ende der langen Komponente, da die Ionen dann durch das elektrische Feld im Ionen-Mobilitätsspektrometer abgesaugt werden und zur Detektionselektrode wandern.
Durch diese zeitliche Abfolge, d.h. durch das Triggern des Peaks zur lonisationam Ende der Messung, werden die Fluoreszenzmessung und die Absorptionsmessung nicht negativ beeinflusst und die erhaltenen Messwerte sind unverfälscht.

### Bezugszeichenliste

- 1: Laser-Multisensorsystem
- 2: Laser-Ionen-Mobilitätsspektrometer
- 3: Detektor zur Adsorptionsmessung
- 4: Fluoreszenzdetektor
- 5: Multireflexionszelle
- 6: Optische Linse
- 7: Spiegel
- 8: Lasersystem
- 9: Probenzuleitung
- 10: Probe
- 11: erste Laserquelle
- 12: zweite Laserquelle
- 13: dritte Laserquelle
- 14: gemeinsame Laserstrahlung
- 15: Kantenfilter
- 16: Spiegel

## Patentansprüche

1. Laser-Multisensorsystem (1) zur selektiven Spurenanalyse organischer Stoffe einer Probe (10), wobei das Multisensorsystem als Detektoren zumindest ein Laser-Ionen-Mobilitätsspektrometer (2), einen Detektor zur Absorptionsmessung (3) und eine Fluoreszenz-Messeinrichtung (4) aufweist,
**gekennzeichnet durch**
ein Lasersystem (8) mit einer ersten Laserquelle (11), einer zweiten Laserquelle (12) und einer dritten Laserquelle (13), die zum simultanen Erzeugen einer gemeinsamen Laserstrahlung (14) mittels einer Strahlkopplung gekoppelt sind, wobei die Laserstrahlen der Laserquellen (11, 12, 13) unterschiedliche Wellenlängen aufweisen und auf die unterschiedlichen Detektoren (2, 3, 4) abgestimmt sind, und wobei die Laserquellen (11, 12, 13) mittels einer Pulssteuereinheit synchronisiert sind, um einen synchronisierten Laserpuls mit Pulskomponenten unterschiedlicher Wellenlängen und Dauer zum gleichzeitigen Betrieb des Laser-Ionen-Mobilitätsspektrometers (2), des Detektors zur Absorptionsmessung(3) und der Fluoreszenz-Messeinrichtung (4) zu erzeugen.

2. Laser-Multisensorsystem (1) nach Anspruch 1, **dadurch gekennzeichnet, dass** das Lasersystem (8) zum Erzeugen einer gemeinsamen Laserstrahlung (14) mit Wellenlängen im IR-, sichtbaren und UV-Bereich vorgesehen ist.

3. Laser-Multisensorsystem (1) nach Anspruch 1, **dadurch gekennzeichnet, dass** für die Absorptionsmessung eine ebene Multireflexionskonfiguration (5) vorgesehen ist.

4. Laser-Multisensorsystem (1) nach Anspruch 1, **dadurch gekennzeichnet, dass** das Laser-Ionen-Mobilitätsspektrometer (2) für den mehrfachen Durchgang der Laserstrahlung (14) durch die Probe (10) vorgesehen ist.

5. Laser-Multisensorsystem (1) nach Anspruch 1, **dadurch gekennzeichnet, dass** die Fluoreszenz-Messeinrichtung (4) einen großen Raumwinkel für die Detektion von charakteristischen Fluoreszenzstrahlungen aufweist.

6. Laser-Multisensorsystem (1) nach Anspruch 1, **dadurch gekennzeichnet, dass** das Laser-Multisensorsystem (1) zur selektiven Spurenanalyse der Probe (10) mit dem Laser-Ionen-Mobilitätsspektrometer (2), dem Detektor zur Absorptionsmessung (3) und der Fluoreszenz-Messeinrichtung (4) derart ausgebildet ist, dass die selektive Spurenanalyse in Echtzeit erfolgt.

7. Laser-Multisensorsystem (1) nach Anspruch 1, **dadurch gekennzeichnet, dass** eine Auswertungseinheit zum Interpretieren der Detektorsignale des Laser-Ionen-Mobilitätsspektrometers (2), des Detektors zur Absorptionsmessung (3) und der Fluoreszenz-Messeinrichtung (4) vorgesehen ist.

8. Laser-Multisensorsystem (1) nach Anspruch 1, **dadurch gekennzeichnet, dass** die Pulskomponenten eine längere Pulskomponente für die Absorptions- und die Fluoreszenzmessung und eine kürzere Pulskomponente zum Ionisieren von Probenmolekülen aufweisen.

9. Laser-Multisensorsystem (1) nach Anspruch 8, **dadurch gekennzeichnet, dass** die kürzere Pulskomponente zeitlich am Ende der längeren Pulskomponente liegt.

## Claims

1. Multi-sensor laser system (1) for the selective trace analysis of organic material of a sample (10), the multi-sensor system having as detectors at least one laser ion mobility spectrometer (2), a detector for absorption measurement (3) and a fluorescent measuring device (4), **characterised by** a laser system (8) with a first laser source (11), a second laser source (12) and a third laser source (13), which are coupled for the simultaneous generation of a common laser beam (14) by means of a beam coupling, whereby the laser beams of the laser sources (11, 12, 13) have different wavelengths and are geared to the different detectors (2, 3, 4), and whereby the laser sources (11, 12, 13) are synchronised by means of a pulse control unit, in order to generate a synchronised laser pulse with pulse components of different wavelengths and duration for the simultaneous operation of the laser ion mobility spectrometer (2), the detector for absorption measurement (3) and the fluorescent measuring device (4).

2. Multi-sensor laser system (1) according to claim 1, **characterised in that** the laser system (8) for the generation of a common laser beam (14) is provided with wavelengths in the IR, visible and UV ranges.

3. Multi-sensor laser system (1) according to claim 1, **characterised in that** a level multi-reflection configuration is provided for the absorption measurement (5).

4. Multi-sensor laser system (1) according to claim 1, **characterised in that** the laser ion mobility spectrometer (2) is provided for multiple passes of the laser beam (14) through the sample (10).

5. Multi-sensor laser system (1) according to claim 1, **characterised in that** the fluorescent measuring device (4) has a large spatial angle for the detection of characteristic fluorescent radiation.

6. Multi-sensor laser system (1) according to claim 1, **characterised in that** the multi-sensor laser system (1) for the selective trace analysis of the sample (10) with the laser ion mobility spectrometer (2), the detector for absorption measurement (3) and the fluorescent measuring device (4) is embodied such that the selective trace analysis takes place in real time.

7. Multi-sensor laser system (1) according to claim 1, **characterised in that** an evaluation unit is provided to interpret the detector signals of the laser ion mobility spectrometer (2), of the detector for absorption measurement (3) and of the fluorescent measuring device (4).

8. Multi-sensor laser system (1) according to claim 1, **characterised in that** the pulse components have a longer pulse component for the measurement of absorption and fluorescence and a shorter pulse component for the ionisation of sample molecules.

9. Multi-sensor laser system (1) according to claim 8, **characterised in that** the shorter pulse component lies at the end of the longer pulse component in respect of time.

## Revendications

1. Système multi-capteurs laser (1) pour l'analyse sélective de traces de substances organiques d'un échantillon (10), dans lequel le système multi-capteurs présente comme détecteurs au moins un spectromètre à mobilité d'ions laser (2), un détecteur pour la mesure d'absorption (3) et un dispositif de mesure à fluorescence (4),
**caractérisé par**
un système laser (8) avec une première source de laser (11), une deuxième source de laser (12) et une troisième source de laser (13) qui sont couplées pour la génération simultanée d'un rayonnement laser commun (14) au moyen d'un couplage de rayon, dans lequel les rayons laser des sources de laser (11, 12, 13) présentent des longueurs d'onde différentes et sont adaptés aux détecteurs différents (2, 3, 4), et dans lequel les sources de laser (11, 12, 13) sont synchronisées au moyen d'une unité de commande à impulsion pour générer une impulsion laser synchronisée avec des composants d'impulsion de longueurs d'onde et durées différentes pour l'actionnement simultané du spectromètre à mobilité d'ions laser (2), du détecteur pour la mesure d'absorption (3) et du dispositif de mesure à fluorescence (4).

2. Système multi-capteurs laser (1) selon la revendication 1, **caractérisé en ce que** le système laser (8) est prévu pour générer un rayonnement laser commun (14) avec des longueurs d'onde dans la plage IR, visible et UV.

3. Système multi-capteurs laser (1) selon la revendication 1, **caractérisé en ce que**, pour la mesure d'absorption est prévue une configuration plane à réflexion multiple (5).

4. Système multi-capteurs laser (1) selon la revendication 1, **caractérisé en ce que** le spectromètre à mobilité d'ions laser (2) est prévu pour le passage multiple du rayonnement laser (14) au travers de l'échantillon (10).

5. Système multi-capteurs laser (1) selon la revendication 1, **caractérisé en ce que** le dispositif de mesure de fluorescence (4) présente un grand angle solide pour la détection de rayonnements de fluorescence caractéristiques.

6. Système multi-capteurs laser (1) selon la revendication 1, **caractérisé en ce que** le système multi-capteurs laser (1) pour l'analyse sélective de traces de l'échantillon (10) avec le spectromètre à mobilité d'ions laser (2), le détecteur pour la mesure d'absorption (3) et le dispositif de mesure à fluorescence (4) est conçu de telle sorte que l'analyse de traces s'effectue en temps réel.

7. Système multi-capteurs laser (1) selon la revendication 1, **caractérisé en ce qu'**une unité d'évaluation est prévue pour l'interprétation des signaux de détecteur du spectromètre à mobilité d'ions laser (2), du détecteur pour la mesure d'absorption (3) et du dispositif de mesure à fluorescence (4).

8. Système multi-capteurs laser (1) selon la revendication 1, **caractérisé en ce que** les composants d'impulsion présentent un composant d'impulsion plus long pour la mesure d'absorption et de fluorescence et un composant d'impulsion plus court pour l'ionisation des molécules de l'échantillon.

9. Système multi-capteurs laser (1) selon la revendication 8, **caractérisé en ce que** les composants d'impulsion plus courts se situent temporellement à la fin des composants d'impulsion plus longs.
